# EUROPÄISCHE PATENTSCHRIFT

(11) **EP 3 285 038 B1**
(45) Veröffentlichungstag und Bekanntmachung des Hinweises auf die Patenterteilung: **24.04.2019**
(21) Anmeldenummer: 17186359.0
(22) Anmeldetag: 16.08.2017
(51) Int. Cl.: F28D 20/02, F28D 1/03, F28D 20/00

(54) **WÄRMESPEICHER**
HEAT ACCUMULATOR
ACCUMULATEUR DE CHALEUR

(30) Priorität: 18.08.2016 DE 102016115343
(43) Veröffentlichungstag der Anmeldung: 21.02.2018
(73) Patentinhaber: Viessmann Werke GmbH & Co. KG, 35108 Allendorf (DE)
(72) Erfinder: Vaupel, Manfred, 35066 Frankenberg (DE); Bühring, Andreas, 79100 Freiburg (DE); Brockmann, Robert, 60316 Frankfurt (DE)
(74) Vertreter: Wolf, Michael

(56) Entgegenhaltungen:
- WO-A1-2016/062335
- WO-A2-2013/059467
- DE-A1- 2 835 072
- DE-U1-202012 012 684

## Beschreibung

Die Erfindung betrifft einen Wärmespeicher gemäß dem Oberbegriff des Patentanspruchs 1.

Ein Wärmespeicher der eingangs genannten Art ist aus dem Patentdokument EP 2 848 885 A1 bekannt. Dieser Wärmespeicher besteht aus einem Behälter, in dem sowohl plattenförmige Wärmeübertrager als auch ein (hier und nachfolgend in der Bedeutung von "mindestens ein") rohrförmiger Wärmeübertrager angeordnet sind. Derartige Wärmespeicher werden in Verbindung mit einer Wärmepumpe in geothermischen Anlagen beispielsweise zur Beheizung von Gebäuden verwendet. Dabei dient der plattenförmige Wärmeübertrager dazu, dem Wärmespeicher Wärme zu entziehen. Mit Hilfe des rohrförmigen Wärmeübertragers kann dem Wärmespeicher dagegen Wärme zugeführt werden.

Ein weiterer Wärmespeicher gemäss dem Oberbegriff zeigt die WO 2016062335A.

Der Erfindung liegt die Aufgabe zugrunde, einen Wärmespeicher, insbesondere einen sogenannten Eisspeicher, der eingangs genannten Art zu verbessern. Insbesondere soll bei einem solchen Wärmespeicher die Positionierung und Montage des rohrförmigen Wärmeübertragers verbessert werden.

Diese Aufgabe ist mit einem Wärmespeicher, insbesondere Eisspeicher, der eingangs genannten Art durch die im Kennzeichen des Patentanspruchs 1 aufgeführten Merkmale gelöst.

Nach der Erfindung ist also vorgesehen, dass der rohrförmige Wärmeübertrager an randseitigen Ausnehmungen der plattenförmigen Wärmeübertrager befestigt ausgebildet ist.

Mit anderen Worten zeichnet sich die erfindungsgemäße Lösung somit dadurch aus, dass der rohrförmige Wärmeübertrager, welcher insbesondere als sogenannter Regenerationswärmeübertrager ausgebildet ist, nicht mehr, wie bei der oben genannten Lösung, auf dem Boden des Behälters unterhalb der plattenförmigen Wärmeübertrager, welche insbesondere als sogenannter Entzugswärmeübertrager ausgebildet sind, abgelegt wird, sondern gezielt an randseitigen Ausnehmungen des plattenförmigen Wärmeübertragers, die vorzugsweise formschlüssig zum Rohrquerschnitt des rohrförmigen Wärmeübertragers ausgebildet sind, fixiert ist.

Andere vorteilhafte Weiterbildungen ergeben sich aus den abhängigen Patentansprüchen.

Der Vollständigkeit halber wird noch auf die weiter abliegenden Dokumente DE 28 35 072 A1 und DE 20 2012 012 684 U1 verwiesen.

Der erfindungsgemäße Wärmespeicher einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: eine Ausführungsform des plattenförmigen Wärmeübertragers des erfindungsgemäßen Wärmespeichers;
- Figur 2: ein vergrößerter Ausschnitt des Bereichs um die Ausnehmungen in Figur 1 herum;
- Figur 3: ein Bündel plattenförmiger Wärmeübertrager mit herumgewickeltem rohrförmigen Wärmeübertrager;
- Figur 4: das Bündel plattenförmiger Wärmeübertrager gemäß Figur 3 angeordnet in den gewellten Wandabschnitten einer Halbschale des Behälters; und
- Figur 5: eine Außenansicht des das Bündel plattenförmiger Wärmeübertrager gemäß Figur 3 umfassenden Behälters mit beiden Halbschalen.

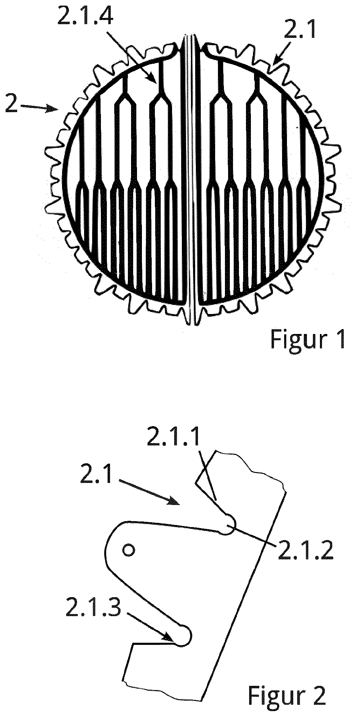

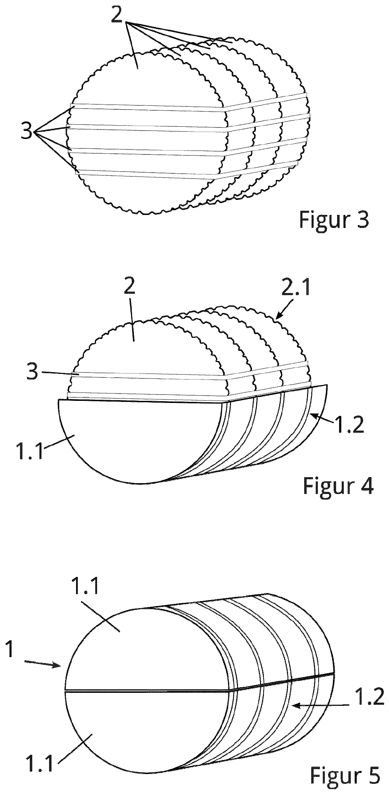

Der in den Figuren dargestellte Wärmespeicher, hier ein sogenannter Eisspeicher, bei dem die Wärmeübertrager von Wasser bzw. Eis umschlossen sind, besteht aus einem Behälter 1, in dem sowohl plattenförmige Wärmeübertrager 2 als auch ein rohrförmiger Wärmeübertrager 3 angeordnet sind, wie in den Figuren 3 bis 6 zu erkennen ist. Bevorzugt ist dabei, dass der plattenförmige Wärmeübertrager 2 Kanäle 2.1.4 zur Führung eines Wärmeträgermediums aufweist (siehe Figur 1).

Wesentlich für den erfindungsgemäßen Wärmespeicher ist nun, dass der rohrförmige Wärmeübertrager 3 an randseitigen Ausnehmungen 2.1 der plattenförmigen Wärmeübertrager 2 befestigt ausgebildet ist.

Hierbei ist vorzugsweise vorgesehen, dass diese Ausnehmung 2.1 als allein formbedingt und ohne weitere Fixierhilfsmittel auskommende Rastverbindung zwischen dem plattenförmigen Wärmeübertrager 2 und dem rohrförmigen Wärmeübertrager 3 ausgebildet ist. Bevorzugterweise weist dann die Ausnehmung 2.1 plattenrandseitig einen Einführbereich 2.1.1 und daran anschließend einen Fixierbereich 2.1.2 für den rohrförmigen Wärmeübertrager 3 auf. Bevorzugt ist hierbei, dass ein Übergangsbereich zwischen dem Einführbereich 2.1.1 und dem Fixierbereich 2.1.2 in Form von ein selbsttätiges Lösen des rohrförmigen Wärmeübertragers 3 vom plattenförmigen Wärmeübertrager 2 verhindernden Rastnasen 2.1.3 ausgebildet ist (siehe Figur 2). Weiterhin ist vorzugsweise der Einführbereich 2.1.1 sich in Richtung Fixierbereich 2.1.2 verengend ausgebildet und zudem bevorzugt, dass der Fixierbereich 2.1.2 mindestens teilweise einen Querschnitt wie der rohrförmige Wärmeübertrager 3 aufweist.

Des Weiteren ist der rohrförmige Wärmeübertrager 3 bevorzugterweise aus einem von Hand biegbaren Kunststoffrohr gebildet.

Vorzugsweise ist der rohrförmige Wärmeübertrager 3 auch mit seiner Rohrlängsachse senkrecht zur Ebene der plattenförmigen Wärmeübertrager 2 in den Ausnehmungen 2.1 angeordnet, wobei weiterhin bevorzugt der mindestens eine rohrförmige Wärmeübertrager 3 in Form einer Wicklung mehrere, parallel zueinander angeordnete plattenförmige Wärmeübertrager 2 umschließend ausgebildet ist (siehe Figur 3).

Der Gesamtaufbau des Wärmespeichers ist zuletzt vorzugsweise so konzipiert, dass mehrere plattenförmige Wärmeübertrager 2 parallel zueinander im Behälter 1 angeordnet sind, wobei mindestens ein rohrförmiger Wärmeübertrager 3 nacheinander an den Ausnehmungen 2.1 nebeneinander angeordneter plattenförmiger Wärmeübertrager 2 befestigt ausgebildet ist. Hierbei ist bevorzugt der Behälter 1 aus zwei, die plattenförmigen Wärmeübertrager 2 zwischen sich aufnehmenden Halbschalen 1.1 gebildet, wobei bevorzugterweise die Halbschalen 1.1 zur formschlüssigen Fixierung der plattenförmigen Wärmeübertrager 2 mindestens teilweise einen gewellten Wandabschnitt 1.2 aufweisen (siehe Figuren 4 und 5).

Funktional gesehen ist es also in einer bevorzugten Ausführungsform des erfindungsgemäßen Wärmespeichers beispielsweise möglich, zunächst mehrere plattenförmige Wärmeübertrager 2 in den gewellten Wandabschnitten 1.2 der unteren Halbschale 1.1 des Behälters 1 anzuordnen, wie in Figur 4 dargestellt, und dann den rohrförmigen Wärmeübertrager 3 um die obere Hälfte der plattenförmigen Wärmeübertrager 2 zu wickeln und in den Ausnehmungen 2.1 zu befestigen. Zuletzt wird die obere Halbschale 1.1 des Behälters 1 aufgesetzt, der Wärmespeicher so gedreht, dass die vormals obere Halbschale 1.1 zu Boden zeigt und die vormals untere Halbschale 1.1 wieder abgenommen. Nun kann die zweite Hälfte der plattenförmigen Wärmeübertrager 2 mit dem rohrförmigen Wärmeübertrager 3 umwickelt werden. Ist dies geschehen, kann die vormals untere Halbschale 1.1 wieder aufgesetzt werden und der Wärmespeicher ist (nach entsprechender Befüllung mit einem Wärmespeichermedium, hier insbesondere Wasser) einsatzbereit (siehe Figur 5). Diese Vorgehensweise verdeutlicht, dass der erfindungsgemäße Wärmespeicher eine sehr einfache Montage erlaubt, welche wenig Raum für Fehler lässt und wenig Zeitaufwand erfordert.

### (21611-EP)

### Bezugszeichenliste

- 1: Behälter
- 1.1: Halbschale
- 1.2: Wandabschnitt
- 2: plattenförmiger Wärmeübertrager (Entzugswärmetauscher)
- 2.1: Ausnehmung
- 2.1.1: Einführbereich
- 2.1.2: Fixierbereich
- 2.1.3: Rastnase
- 2.1.4: Kanal
- 3: rohrförmiger Wärmeübertrager (Regenerationswärmetauscher)

## Patentansprüche

1. Wärmespeicher, umfassend einen Behälter (1), in dem sowohl plattenförmige Wärmeübertrager (2) als auch ein rohrförmige Wärmeübertrager (3) angeordnet sind,
**dadurch gekennzeichnet,**
**dass** der rohrförmige Wärmeübertrager (3) an randseitigen Ausnehmungen (2.1) der plattenförmigen Wärmeübertrager (2) befestigt ausgebildet ist.

2. Wärmespeicher nach Anspruch 1,
**dadurch gekennzeichnet,**
**dass** die Ausnehmung (2.1) als allein formbedingt und ohne weitere Fixierhilfsmittel auskommende Rastverbindung zwischen dem plattenförmigen Wärmeübertrager (2) und dem rohrförmigen Wärmeübertrager (3) ausgebildet ist.

3. Wärmespeicher nach Anspruch 1 oder 2,
**dadurch gekennzeichnet,**
**dass** die Ausnehmung (2.1) plattenrandseitig einen Einführbereich (2.1.1) und daran anschließend einen Fixierbereich (2.1.2) für den rohrförmigen Wärmeübertrager (3) aufweist.

4. Wärmespeicher nach Anspruch 3,
**dadurch gekennzeichnet,**
**dass** ein Übergangsbereich zwischen dem Einführbereich (2.1.1) und dem Fixierbereich (2.1.2) in Form von ein selbsttätiges Lösen des rohrförmigen Wärmeübertragers (3) vom plattenförmigen Wärmeübertrager (2) verhindernden Rastnasen (2.1.3) ausgebildet ist.

5. Wärmespeicher nach Anspruch 3 oder 4,
**dadurch gekennzeichnet,**
**dass** der Einführbereich (2.1.1) sich in Richtung Fixierbereich (2.1.2) verengend ausgebildet ist.

6. Wärmespeicher nach einem der Ansprüche 3 bis 5,
**dadurch gekennzeichnet,**
**dass** der Fixierbereich (2.1.2) mindestens teilweise einen Querschnitt wie der rohrförmige Wärmeübertrager (3) aufweist.

7. Wärmespeicher nach einem der Ansprüche 1 bis 6,
**dadurch gekennzeichnet,**
**dass** der rohrförmige Wärmeübertrager (3) aus einem von Hand biegbaren Kunststoffrohr gebildet ist.

8. Wärmespeicher nach einem der Ansprüche 1 bis 7,
**dadurch gekennzeichnet,**
**dass** der rohrförmige Wärmeübertrager (3) mit seiner Rohrlängsachse senkrecht zur Ebene der plattenförmigen Wärmeübertrager (2) in den Ausnehmungen (2.1) angeordnet ist.

9. Wärmespeicher nach einem der Ansprüche 1 bis 8,
**dadurch gekennzeichnet,**
**dass** der rohrförmige Wärmeübertrager (3) in Form einer Wicklung mehrere, parallel zueinander angeordnete plattenförmige Wärmeübertrager (2) umschließend ausgebildet ist.

10. Wärmespeicher nach einem der Ansprüche 1 bis 9,
**dadurch gekennzeichnet,**
**dass** mehrere plattenförmige Wärmeübertrager (2) parallel zueinander im Behälter (1) angeordnet sind, wobei mindestens ein rohrförmiger Wärmeübertrager (3) nacheinander an den Ausnehmungen (2.1) nebeneinander angeordneter plattenförmiger Wärmeübertrager (2) befestigt ausgebildet ist.

## Claims

1. A heat accumulator comprising a container (1) in which both plate-shaped heat exchangers (2) and a tubular heat exchanger (3) are arranged,
**characterized in that**
the tubular heat exchanger (3) is secured to peripheral recesses (2.1) in the plate-shaped heat exchangers (2).

2. The heat accumulator according to claim 1,
**characterized in that**
the recess (2.1) is configured as a latching connection between the plate-shaped heat exchanger (2) and the tubular heat exchanger (3), which latching connection is exclusively form-induced and does not require further fixing aids.

3. The heat accumulator according to claim 1 or 2,
**characterized in that**
the recess (2.1) has an insertion region (2.1.1) on the plate edge side and a fixing region (2.1.2) attached thereto for the tubular heat exchanger (3).

4. The heat accumulator according to claim 3,
**characterized in that**
a transitional region is formed between the insertion region (2.1.1) and the fixing region (2.1.2) in the form of detent lugs (2.1.3) preventing an automatic release of the tubular heat exchanger (3) from the plate-shaped heat exchanger (2).

5. The heat accumulator according to claim 3 or 4,
**characterized in that**
the insertion region (2.1.1) tapers in the direction of the fixing region (2.1.2).

6. The heat accumulator according to one of claims 3 to 5,
**characterized in that**
the fixing region (2.1.2) has at least partially a cross section like the tubular heat exchanger (3).

7. The heat accumulator according to one of claims 1 to 6,
**characterized in that**
the tubular heat exchanger (3) is formed from a handbendable plastics pipe.

8. The heat accumulator according to one of claims 1 to 7,
**characterized in that**
the tubular heat exchanger (3) is arranged with its tube longitudinal axis perpendicular to the plane of the plate-shaped heat exchangers (2) in the recesses (2.1).

9. The heat accumulator according to one of claims 1 to 8,
**characterized in that**
the at least one tubular heat exchanger (3) is configured in the form of a winding enclosing a plurality of plate-shaped heat exchangers (2) arranged in parallel to one another.

10. The heat accumulator according to one of claims 1 to 9,
**characterized in that**
multiple plate-shaped heat exchangers (2) are arranged parallel to one another in the container (1), wherein at least one tubular heat exchanger (3) is fastened in succession to the recesses (2.1) of plate-shaped heat exchangers (2) arranged alongside one another.

## Revendications

1. Accumulateur de chaleur, comprenant un conteneur (1), dans lequel sont disposés tant des échangeurs de chaleur en forme de plaque (2) qu'un échangeur de chaleur tubulaire (3), **caractérisé en ce que** l'échangeur de chaleur tubulaire (3) est constitué fixé sur les cavités en bordure (2.1) des échangeurs de chaleur en forme de plaque (2).

2. Accumulateur de chaleur selon la revendication 1,
**caractérisé en ce que**
la cavité (2.1) est constituée entre l'échangeur de chaleur en forme de plaque (2) et l'échangeur de chaleur tubulaire (3) sous une forme géométrique unique et de liaison à crans se passant sans d'autres moyens de fixation.

3. Accumulateur de chaleur selon la revendication 1 ou 2,
**caractérisé en ce que**
la cavité (2.1) comporte du côté bord de la plaque une zone d'entrée (2.1.1) et une zone de fixation (2.1.2) s'y raccordant pour l'échangeur de chaleur tubulaire (3).

4. Accumulateur de chaleur selon la revendication 3,
**caractérisé en ce**
**qu'**une zone de transition est constituée entre la zone d'entrée (2.1.1) et la zone de fixation (2.1.2) sous la forme des becs d'encliquetage (2.1.3) évitant un desserrage automatique de l'échangeur de chaleur tubulaire (3) de l'échangeur de chaleur en forme de plaque (2).

5. Accumulateur de chaleur selon la revendication 3 ou 4,
**caractérisé en ce que**
la zone d'entrée (2.1.1) est constituée se rétrécissant en direction de la zone de fixation (2.1.2).

6. Accumulateur de chaleur selon l'une quelconque des revendications 3 à 5,
**caractérisé en ce que**
la zone de fixation (2.1.2) comporte au moins en partie une section transversale comme l'échangeur de chaleur tubulaire (3).

7. Accumulateur de chaleur selon l'une quelconque des revendications 1 à 6,
**caractérisé en ce que**
l'échangeur de chaleur tubulaire (3) est constitué à partir d'un tube en matière plastique pouvant être plié à la main.

8. Accumulateur de chaleur selon l'une quelconque des revendications 1 à 7,
**caractérisé en ce que**
l'échangeur de chaleur tubulaire (3) est disposé dans les cavités (2.1) avec son axe longitudinal tubulaire perpendiculairement au plan de l'échangeur de chaleur en forme de plaque (2).

9. Accumulateur de chaleur selon l'une quelconque des revendications 1 à 8,
**caractérisé en ce que**
l'échangeur de chaleur tubulaire (3) est constitué sous la forme d'un enroulement entourant plusieurs échangeurs de chaleur en forme de plaque (2) disposés parallèlement les uns aux autres.

10. Accumulateur de chaleur selon l'une quelconque des revendications 1 à 9,
**caractérisé en ce que**
plusieurs échangeurs de chaleur en forme de plaque (2) sont disposés dans le conteneur (1) parallèlement les uns aux autres, dans lequel au moins un échangeur de chaleur tubulaire (3) étant constitué fixé en succession sur les cavités (2.1) des échangeurs de chaleur en forme de plaque (2) disposés les uns à côté des autres.
